# FASCICULE DE BREVET EUROPEEN

(11) **EP 0 598 957 B1**
(45) Date de publication et mention de la délivrance du brevet: **23.08.1995**
(21) Numéro de dépôt: 92403079.4
(22) Date de dépôt: 16.11.1992
(51) Int. Cl.: A22B 5/16

(54) **Dispositif de dépouillage d'animaux notamment d'ovins et de caprins**
Vorrichtung zum Enthäuten von Schlachttieren, insbesondere von Schafen und Ziegen
Device for dehiding animals, in particular goats and sheep

(43) Date de publication de la demande: 01.06.1994
(73) Titulaire: S.A. LOEUL-PIRIOT, F-79100 Thouars (FR)
(72) Inventeur: Loeul, Frédéric, F-79100 Luzay (FR)
(74) Mandataire: Thébault, Jean-Louis

(56) Documents cités:
- FR-A- 1 346 412
- US-A- 3 835 502
- US-A- 4 011 630
- US-A- 5 087 222

## Description

La présente invention a pour objet un dispositif de dépouillage d'animaux, notamment d'ovins et de caprins.

Dans les convoyeurs d'abattage d'animaux en vue de la consommation de viande, il existe des postes particulièrement pénibles à exercer par l'homme et la tendance est de les remplacer par des machines.

De telles machines restent néanmoins très complexes car les tâches à effectuer correspondent à des gestes réalisés par l'homme et qui sont difficilement reproductibles à l'aide de moyens mécaniques.

C'est néanmoins l'objet de l'invention de proposer un dispositif de dépouillage qui permet de limiter les interventions manuelles. En effet, si l'on prend comme exemple les chevreaux, ceux-ci sont amenés sur le convoyeur et après qu'ils aient été tués, notamment à l'aide d'un instrument à choc, la première opération consiste à cisailler les cornes et les sabots des chevreaux ainsi suspendus après les avoir saignés.

Ensuite des entailles sont pratiquées au niveau de la peau de façon à préparer l'opération de dépouillage.

Cette opération est très délicate car il convient de retirer la peau sans abîmer celle-ci pour ne pas la dégrader afin qu'elle puisse être traitée en tannerie et il faut simultanément ne pas porter atteinte à la chair de l'animal et à la fine peau qui la recouvre de façon que les quartiers de viande ultérieurement découpés soient exempts de défauts.

Sur les convoyeurs dits manuels, le personnel chargé du dépouillage doit exercer un certain nombre de tractions sur la peau et exercer des efforts importants afin d'en assurer le décollement ce qui requiert une certaine force physique et reste un poste pénible. On connaît le brevet américain US-A-3 835 502 qui décrit une chaîne de dépouillage de porcs à fonctionnement automatique et continu. L'installation selon ce document est d'un type dont tous les éléments nécessaires à l'invention sont énumérés dans le préambule de la revendication principale.

La présente invention a pour objet un dispositif de dépouillage d'animaux et notamment d'ovins et de caprins qui assure un dépouillage automatique après découpe préalable des cornes et des sabots et incision de la peau au droit de la tête du ventre et des pattes de l'animal.

Ce dispositif permet d'assurer une cadence de travail importante compatible avec les autres étapes de la chaîne manuelle.

D'autre part, ce dispositif est compact et peut s'intégrer dans la chaîne puisqu'il dispose d'une entrée des animaux et d'une évacuation des animaux dépouillés d'un côté et des peaux de l'autre.

D'autre part, comme il s'agit d'un lieu soumis à des règles strictes d'hygiène, le dispositif de la pré-sente invention peut être entièrement nettoyé et désinfecté grâce à une grande accessibilité et à une simplification des éléments qui le composent.

A cet effet, le dispositif de dépouillage d'animaux, notamment d'ovins et de caprins dont les cornes et les sabots éventuels ont été préalablement sectionnés se caractérise en ce qu'il comprend un bâti, un premier convoyeur d'animaux comprenant des moyens d'accrochage de ces animaux et disposé à hauteur fixe et un second convoyeur parallèle sur au moins une partie de sa longueur avec le premier convoyeur et synchrone avec celui-ci, entraînant des éléments verticaux sur lesquels des moyens de préhension (16) de la peau des animaux sont montés mobiles en translation.

Selon une autre caractéristique de l'invention, le convoyeur comprend des barres de liaison des éléments verticaux et des moyens de guidage maintenant l'écart constant entre deux éléments, la boucle ainsi constituée étant entraînée par deux platines haute et basse.

Selon un mode préféré de réalisation, les éléments verticaux sont munis en pied de galets, prévus pour coopérer avec une piste de roulement de façon à assurer la reprise des efforts verticaux.

Selon une autre caractéristique particulière, le dispositif de dépouillage, se caractérise en ce que les moyens de préhension comprennent au moins un chariot muni d'au moins une paire de pinces et monté mobile verticalement entre deux éléments verticaux adjacents.

De plus le chariot de guidage est prévu pour coopérer avec un rail solidaire du bâti, disposé parallèlement au premier convoyeur et incliné du haut des éléments verticaux vers le bas sur toute la partie pour laquelle les premier et second convoyeurs sont parallèles.

Selon une autre caractéristique de l'invention, chaque paire de pinces comprend des bras articulés, dont les mors sont munis de patins de préhension, et des vérins de manoeuvre de ces bras articulés.

Par ailleurs, chaque chariot comprend une paire de pinces de cou et une paire de pinces de corps.

Cette paire de pinces de cou est montée basculante entre une position verticale, mors vers le bas et parallèles aux éléments du second convoyeur et une position horizontale.

Selon un mode de réalisation préféré de l'invention, le bâti du dispositif comprend en outre une passerelle haute permettant à un utilisateur d'accrocher les animaux sur les moyens d'accrochage du premier convoyeur.

Selon un autre mode de réalisation, les moyens d'accrochage de ce premier convoyeur comprend des crochets prévus pour recevoir les pattes postérieures des animaux afin que la tête soit située au droit des paires de pinces, lorsque le chariot est en position haute.

L'invention est décrite ci-après selon un mode de réalisation particulier, non limitatif, en regard des dessins annexés sur lesquels :
- la figure 1 représente une vue schématique de dessus du dispositif de dépouillage selon l'invention,
- la figure 2 représente une vue partielle du dispositif selon l'invention, en élévation latérale, avec la partie haute de la rampe,
- la figure 3 représente une vue partielle du dispositif, en élévation latérale, avec la partie basse de la rampe de guidage,
- la figure 4 représente une vue suivant la flèche de la figure 2,
- la figure 5 représente une vue de détail du montage en pied des éléments verticaux du dispositif selon l'invention,
- la figure 6 représente une vue en coupe d'un des éléments verticaux avec les galets de guidage et le chariot support de pince,
- la figure 7 représente une vue en coupe de la rampe de guidage et de l'ergot de guidage du chariot,
- la figure 8 représente une vue d'une paire de pinces de cou vue de dessus avec arrachement partiel, et

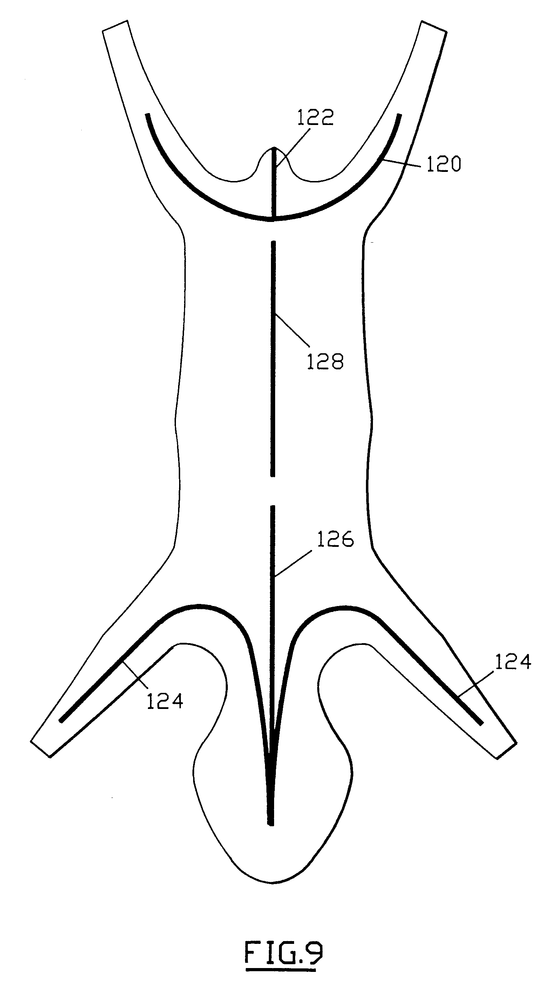

- la figure 9 représente une vue schématique du positionnement des découpes manuelles préalables.

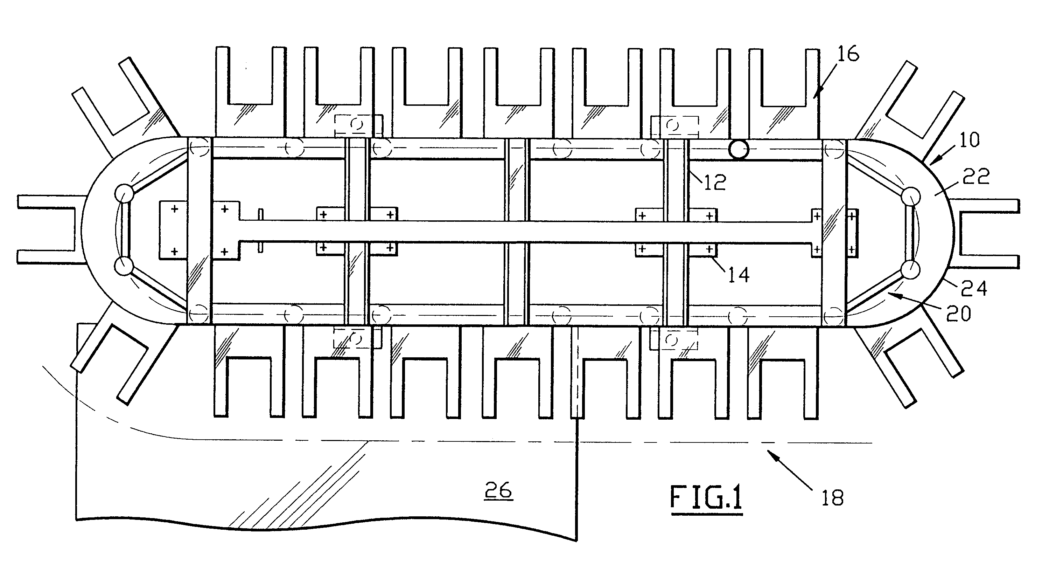

Sur la figure 1, on a représenté un bâti 10, muni d'entretoises 12 et de fixation au sol 14 ainsi que des moyens de préhension 16 de la peau des animaux.

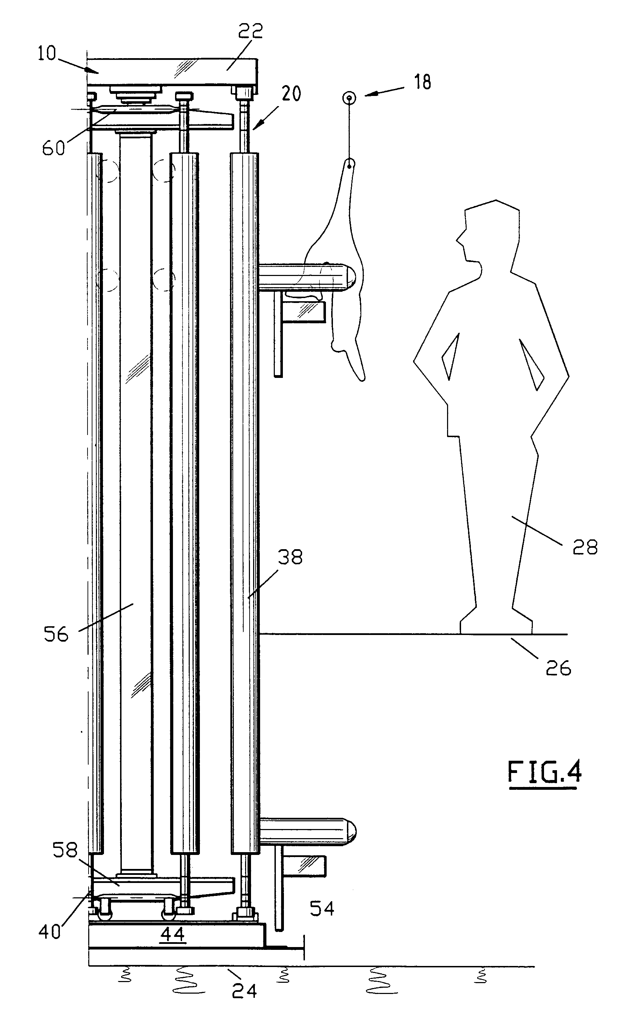

Ce dispositif comprend en outre un premier convoyeur 18, ainsi qu'un second convoyeur 20. Le bâti 10 comprend un chemin de guidage supérieur 22 et un chemin de roulement 24, ainsi que cela est mieux représenté sur la figure 4.

Ce bâti est complété en outre par une passerelle 26, également représentée sur la figure 4, et destinée à supporter un membre du personnel, lui aussi schématiquement représenté sur cette figure 4.

Le premier convoyeur 18 est à hauteur fixe, sous le plafond 30, sous lequel est placé le dispositif. Ce premier convoyeur comprend des supports 32 sur lesquels sont accrochés des animaux 34, par les pattes antérieures 36, de façon connue.

Le second convoyeur 20 comprend des éléments verticaux 38 disposés parallèlement les uns aux autres et se prolongeant du chemin de guidage supérieur 22 au chemin de roulement inférieur 24.

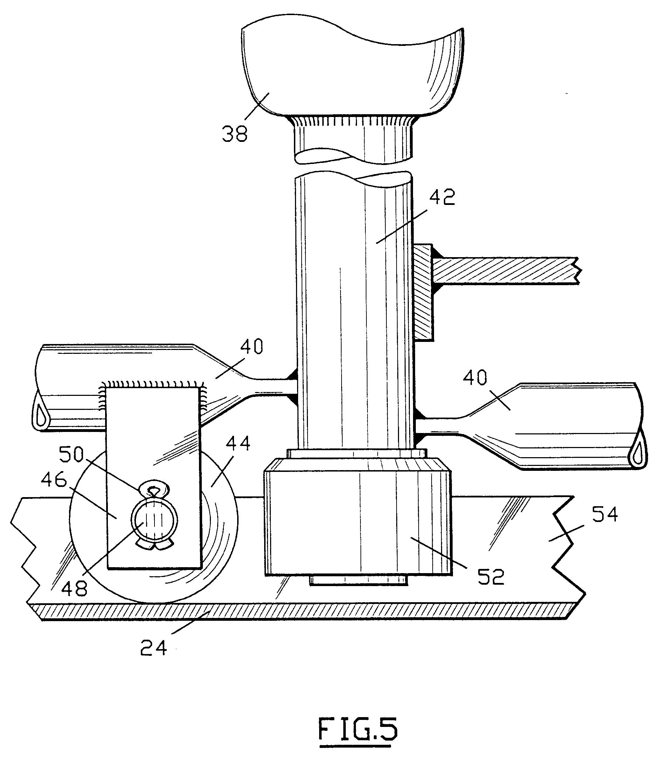

Ces éléments verticaux 38 sont reliés entre eux par des barres de liaison 40, en partie supérieure comme en partie inférieure, le détail du montage en pied de ces éléments verticaux étant représenté sur la figure 5.

En effet, chaque élément vertical 38 comprend une embase 42 et il est prévu une paire de galets 44, disposée un tirant sur deux qui coopère avec le chemin de roulement 24.

Ces galets sont montés dans une chape 46, elle-même rapportée par soudure sur la barre de liaison 40 qui les supporte, l'axe 48 étant bloqué par une goupille 50.

Par ailleurs, l'embase 42 est munie d'un bloc cylindrique 52 de guidage qui coopère avec un rail 54 en U, également représenté sur la figure 4.

Un arbre moteur 56, représenté sur la figure 4, permet d'entraîner en rotation l'ensemble des éléments verticaux reliés entre eux et constituant une boucle fermée.

Cet entraînement est réalisé à l'aide d'un moteur, non représenté et de type connu, qui entraîne une platine basse 58 et une platine haute 60, ces deux platines étant reliées par l'arbre 56 qui assure la synchronisation des entraînements inférieur et supérieur. Un dispositif identique est prévu à chaque extrémité de ce second convoyeur.

Ainsi que cela est indiqué sur la figure 1, les premier et second convoyeurs sont parallèles entre eux sur au moins une partie qui correspond sensiblement à la partie rectiligne de l'un des côtés du second convoyeur 20.

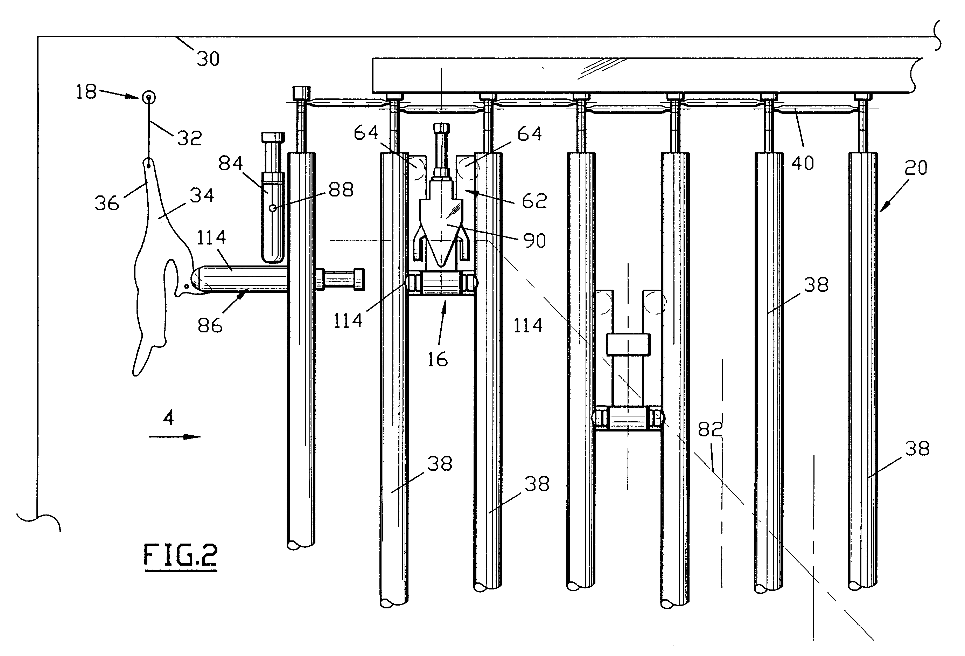

Les éléments de préhension 16 sont montés sur des chariots 62, ainsi que représenté schématiquement sur la figure 2.

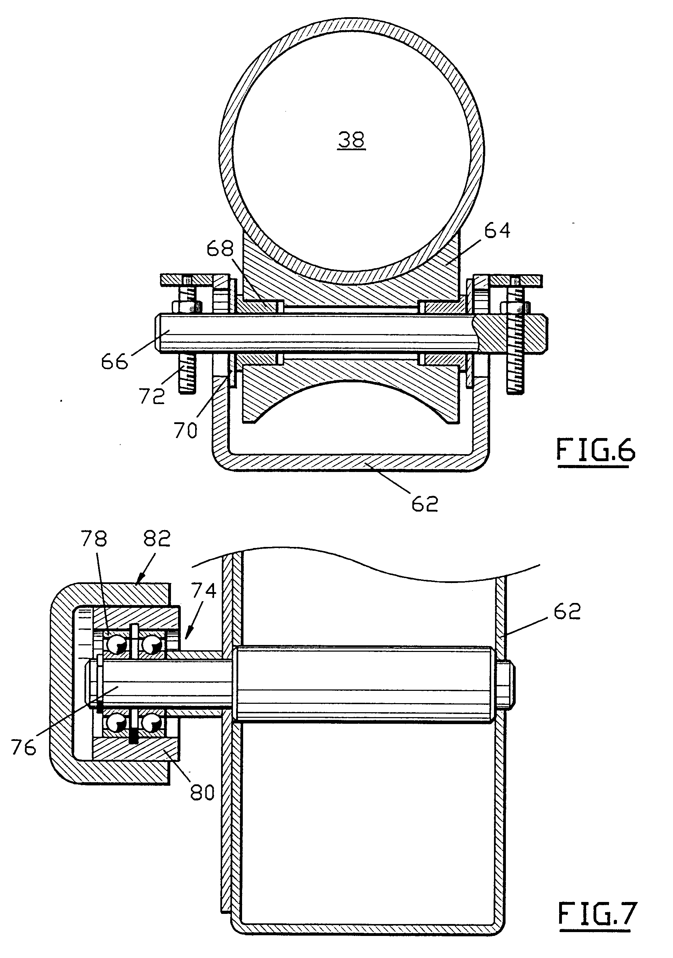

Ces chariots 62 sont montés mobiles en translation verticale entre deux éléments verticaux 38 adjacents et grâce à des galets de guidage 64, représentés en détail sur la figure 6. Chaque galet de guidage est monté à rotation autour d'un arbre 66, monté rotatif grâce à des bagues 68 et bloqué en translation par des ensembles rondelle 70 et goupille 72.

Le chariot 62 comprend en outre sur sa partie arrière un ergot de guidage 74, qui est composé d'un arbre 76 autour duquel un galet 78 est monté à rotation grâce à des roulements 80.

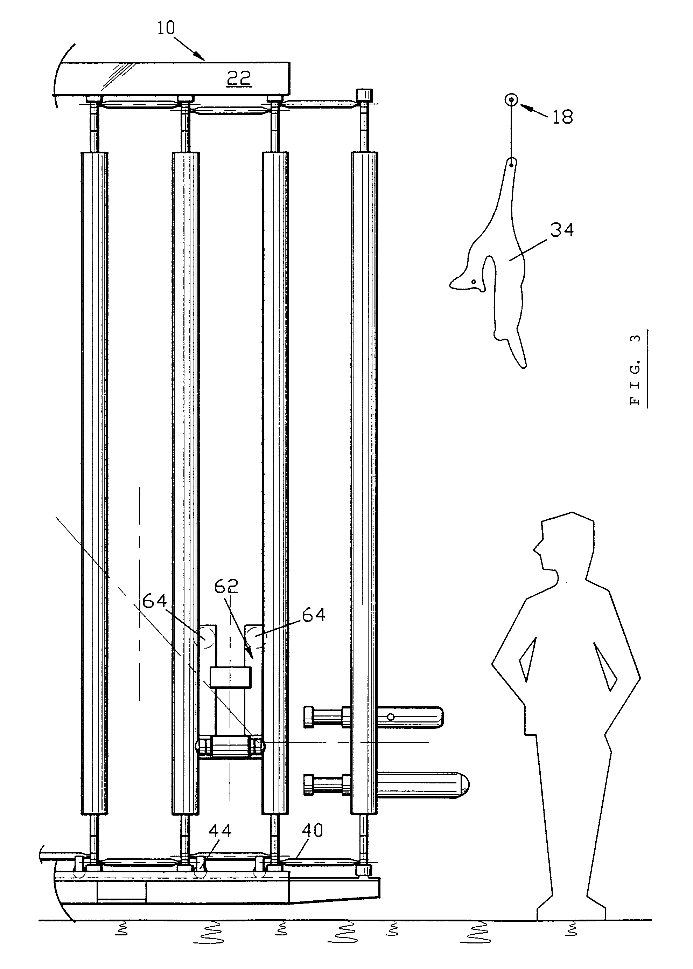

Ce galet 78 est prévu pour coopérer avec un rail 82 solidaire du bâti 10 et schématiquement représenté en trait discontinu sur les figure 2 et 3.

Ce rail 82 comprend un palier horizontal sur la première partie du second convoyeur, ce palier étant situé en partie haute des éléments verticaux 38, puis ce rail est incliné du haut vers le bas le long de la partie où les premier et second convoyeurs sont parallèles, jusqu'à venir à l'autre extrémité en partie basse des éléments verticaux 38 ainsi que cela est représenté sur la figure 3.

Les moyens de préhension de la peau des animaux comprennent une paire de pinces de cou 84 et une paire de pinces de corps 86.

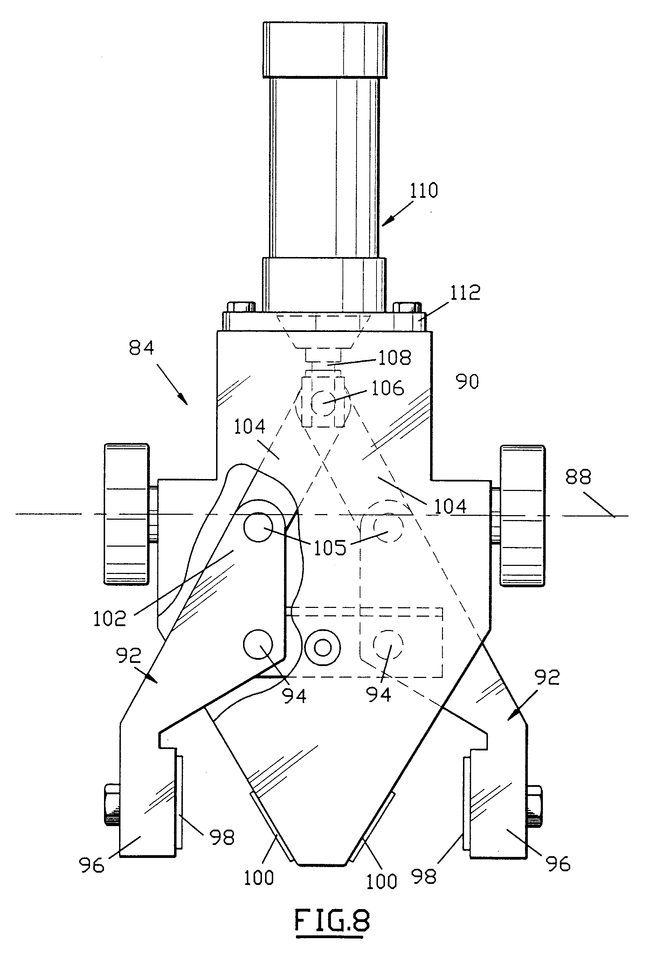

Ces pinces sont sensiblement identiques mise à part la forme de la partie fixe ainsi que cela va être maintenant décrit en regard de la figure 8.

La paire de pinces de cou 84 est montée à rotation autour d'un axe 88 par rapport au chariot 62.

Cette paire de pinces comprend un châssis 90, deux bras articulés 92, montés à rotation autour des axes 94 dans la partie médiane et dont l'une des extrémités 96 porte des patins 98, prévus pour coopérer avec des patins 100 fixes portés par le châssis 90.

L'autre extrémité 102 de ces bras 92 est articulée en 105 avec des biellettes 104, elles-mêmes articulées autour d'un axe 106, solidaire de la tige 108 d'un vérin pneumatique 110, fixé par une embase 112 sur le châssis 90.

La paire de pinces de corps 86, comprend également deux bras articulés 114, mais à la différence de la pince de cou 84, la pince de corps 86 est fixe et horizontale.

Le fonctionnement du dispositif de dépouillage selon l'invention est le suivant.

L'animal est préalablement préparé et après la coupe des sabots et des pinces, il subit des incisions préalables des sabots et des cornes. Pour des raisons de commodité, l'animal est suspendu par les pattes postérieures. Une première découpe 120 est effectuée de l'extrémité de l'une des pattes arrière jusqu'à l'extrémité de l'autre patte avec une entaille 122 au droit de la queue.

Ceci permet d'amorcer le dégagement de l'arrière train.

Deux découpes 124 symétriques sont réalisées de l'extrémité de l'une des pattes avant vers la gorge de l'animal, formant un V .

Enfin, il est prévu une double découpe (126, 128), partout du centre du ventre sensiblement en remontant et en descendant.

L'animal est ensuite suspendu par l'opérateur, pattes antérieures vers le haut.

L'opérateur 28, en partie haute du dispositif, saisit les morceaux de peau pré-dégagés pour les introduire dans les pinces de cou puis assurent une première traction dès que le chariot descend sur la rampe 82, guidé et tracté par l'ergot 74.

L'opérateur positionne ensuite la peau du corps dans les pinces de corps.

Le convoyeur continuant à tourner, le chariot 62 continue à descendre et à exercer une traction vers le bas, jusqu'à ce que l'animal soit intégralement dépouillé.

Les pinces sont actionnées par des vérins pneumatiques et le pilotage s'effectue au moyen d'électrovannes à l'aide de systèmes connus de distribution.

## Revendications

1. Dispositif de dépouillage d'animaux, notamment d'ovins et de caprins dont les cornes et les sabots éventuels ont été préalablement sectionnés, comprenant un bâti (10), un premier convoyeur (18) d'animaux comprenant des moyens d'accrochage de ces animaux et disposé à hauteur fixe et un second convoyeur (20) parallèle sur au moins une partie de sa longueur avec le premier convoyeur, et synchrone avec celui-ci, le second convoyeur entraînant des éléments verticaux (38) sur lesquels des moyens de préhension (16) de la peau des animaux sont montés mobiles en translation, caractérisé en ce que les moyens de préhension comprennent des chariots (62), chaque chariot comprenant un doigt (74) de guidage, prévu pour coopérer avec un rail (82) solidaire du bâti, disposé parallèlement au premier convoyeur (18) et incliné du haut des éléments verticaux (38) vers le bas sur toute la partie pour laquelle les premier et second convoyeurs sont parallèles.

2. Dispositif de dépouillage selon la revendication 1, caractérise en ce que le second convoyeur (20) comprend des barres (40) de liaison des éléments verticaux (38) et des moyens de guidage maintenant l'écart constant entre deux éléments, la boucle ainsi constituée étant entraînée en rotation par deux platines haute et basse.

3. Dispositif de dépouillage selon la revendication 1 ou 2, caractérisé en ce que les éléments verticaux (38) sont munis en pied de galets (44), prévus pour coopérer avec une piste de roulement (24) de façon à assurer la reprise des efforts verticaux.

4. Dispositif de dépouillage selon l'une quelconque des revendications précédentes, caractérisé en ce que les chariots (62) sont munis d'au moins une paire de pinces (84, 86) et montés mobiles verticalement entre deux éléments verticaux adjacents.

5. Dispositif de dépouillage selon l'une quelconque des revendications 3 ou 4, caractérisé en ce que chaque paire de pinces (84, 86) comprend des bras (92) articulés, dont les mors sont munis de patins (98, 100) de préhension, et des vérins (10) de manoeuvre de ces bras articulés.

6. Dispositif de dépouillage selon l'une quelconque des revendications 3 à 5 caractérisé en ce que chaque chariot comprend une paire de pinces (84) de cou et une paire de pinces (86) de corps.

7. Dispositif de dépouillage selon les revendications 1 et 6, caractérisé en ce que la paire de pinces (84) de cou est montée basculante entre une position verticale, mors vers le bas et parallèles aux éléments du second convoyeur et une position horizontale.

8. Dispositif de dépouillage selon l'une quelconque des revendications précédentes, caractérisé en ce que le bâti (10) du dispositif comprend en outre une passerelle haute (26) permettant à un utilisateur d'accrocher les animaux sur les moyens d'accrochage du premier convoyeur.

9. Dispositif de dépouillage selon l'une quelconque des revendications précédentes, caractérisé en ce que les moyens d'accrochage de ce premier convoyeur comprennent des crochets prévus pour recevoir les pattes postérieures des animaux afin que la tête soit située au droit des paires de pinces, lorsque le chariot est en position haute.

## Claims

1. Skinning device for animals, notably sheep and goats whose horns and any hooves have previously been severed, comprising a frame (10), a first animal conveyor (18) comprising means for attaching these animals and disposed at a fixed height and a second conveyor (20) parallel over at least part of its length with the first conveyor and synchronous with it, the second conveyor driving vertical members (38) on which means (16) for gripping the animal skins are mounted so as to move in translation, characterised in that the gripping means comprise carriages (62), each carriage comprising a guide finger (74), designed to cooperate with a rail (82) attached to the frame, disposed parallel to the first conveyor (18) and inclined from the top of the vertical members (38) towards the bottom over the whole part where the first and second conveyors are parallel.

2. Skinning device according to Claim 1, characterised in that the second conveyor (20) comprises bars (40) connecting the vertical members (38) to guide means keeping the distance between two members constant, the loop thus formed being rotated by two top and bottom plates.

3. Skinning device according to Claim 1 or 2, characterised in that the vertical members (38) are provided at their foot with rollers (44), designed to cooperate with a running track (24) so as to absorb the vertical forces.

4. Skinning device according to any one of the preceding claims, characterised in that the carriages (62) are provided with at least one pair of grippers (84, 86) and mounted so as to move vertically between two adjacent vertical members.

5. Skinning device according to either one of Claims 3 or 4, characterised in that each pair of grippers (84, 86) comprises articulated arms (92) whose jaws are provided with gripping pads (98, 100), and jacks (10) for manoeuvring these articulated arms.

6. Skinning device according to any one of Claims 3 to 5, characterised in that each carriage comprises a pair of neck grippers (84) and a pair of body grippers (86).

7. Skinning device according to Claims 1 and 6, characterised in that the pair of neck grippers (84) is mounted so as to tilt between a vertical position, with jaws facing downwards and parallel to the members of the second conveyor, and a horizontal position.

8. Skinning device according to any one of the preceding claims, characterised in that the frame (10) of the device also comprises a high catwalk (26) enabling a user to attach the animals to the attachment means of the first conveyor.

9. Skinning device according to any one of the preceding claims, characterised in that the attachment means of this first conveyor comprise hooks designed to receive the hind feet of the animals so that the head is situated in line with the pairs of grippers when the carriage is in the high position.

## Patentansprüche

1. Vorrichtung zum Enthäuten von Tieren, insbesondere von Schafen und Ziegen, deren Hörner und Hufe gegebenenfalls vorher abgetrennt wurden, umfassend einen Rahmen (10), einen ersten, in fester Höhe angeordneten Förderer (18) für Tiere mit Mitteln zum Einhängen dieser Tiere und einen zweiten Förderer (20), der wenigstens auf einem Teil seiner Länge parallel zu dem ersten Förderer und synchron mit diesem verläuft, wobei der zweite Förderer vertikale Elemente (38) antreibt, auf denen Mittel (16) zum Ergreifen der Tierhaut in Translationsrichtung beweglich angeordnet sind, dadurch gekennzeichnet, daß die Mittel zum Ergreifen Schlitten (62) umfassen, wobei jeder Schlitten einen Führungszapfen (74) aufweist, der zum Zusammenwirken mit einer am Rahmen festen Schiene (82) vorgesehen ist, die parallel zum ersten Förderer (18) angeordnet und vom oberen Bereich der vertikalen Elemente (38) nach unten über den gesamten Abschnitt, auf dem der erste und zweite Förderer parallel verlaufen, geneigt ist.

2. Vorrichtung zum Enthäuten nach Anspruch 1, dadurch gekennzeichnet, daß der zweite Förderer (20) Verbindungsstangen (40) für die vertikalen Elemente (38) und Führungsmittel, die den Abstand zwischen zwei Elementen konstant halten, aufweist, wobei die dadurch gebildete Schleife durch zwei Platten oben und unten angetrieben ist.

3. Vorrichtung zum Enthäuten nach Anspruch 1 oder 2, dadurch gekennzeichnet, daß die vertikalen Elemente (38) mit Rollfüssen (44) versehen sind, die vorgesehen sind, um mit einer Rollbahn (24) derart zusammenzuwirken, daß die Aufnahme von Vertikalkräften sichergestellt wird.

4. Vorrichtung zum Enthäuten nach einem der vorhergehenden Ansprüche, dadurch gekennzeichnet, daß die Schlitten (62) mit wenigstens einem Paar von Greifern (84, 85) versehen und vertikal zwischen zwei benachbarten vertikalen Elementen beweglich sind.

5. Vorrichtung zum Enthäuten nach einem der Ansprüche 3 oder 4, dadurch gekennzeichnet, daß jedes Paar von Greifern (84, 86) angelenkte Arme (92), deren Maul mit Greifbacken versehen sind, und Betätigungszylinder (10) für diese angelenkten Arme umfaßt.

6. Vorrichtung zum Enthäuten nach einem der Ansprüche 3 bis 5, dadurch gekennzeichnet, daß jeder Schlitten ein Paar von Halsgreifern (84) und Paar von Körpergreifern (86) umfaßt.

7. Vorrichtung zum Enthäuten nach einem der Ansprüche 1 bis 6, dadurch gekennzeichnet, daß das Paar von Halsgreifern (84) zwischen einer vertikalen Position, Hals nach unten und parallel zu den Elementen des zweiten Förderers, und einer horizontalen Position schwenkbar ist.

8. Vorrichtung zum Enthäuten nach einem der vorhergehenden Ansprüche, dadurch gekennzeichnet, daß der Rahmen (10) der Vorrichtung zudem eine obere Stegbrücke (26) umfaßt, die es einem Benutzer ermöglicht, die Tiere an den Einhängemitteln des ersten Förderers einzuhängen.

9. Vorrichtung zum Enthäuten nach einem der vorhergehenden Ansprüche, dadurch gekennzeichnet, daß die Mittel zum Einhängen dieses ersten Förderers Haken umfassen, die vorgesehen sind, um die Hinterpfoten der Tiere aufzunehmen, damit der Kopf an der Stelle der Paare von Greifern angeordnet ist, wenn der Schlitten sich in oberer Position befindet.
